# EUROPÄISCHE PATENTSCHRIFT

(11) **EP 3 433 905 B1**
(45) Veröffentlichungstag und Bekanntmachung des Hinweises auf die Patenterteilung: **18.12.2019**
(21) Anmeldenummer: 17710887.5
(22) Anmeldetag: 14.03.2017
(51) Int. Cl.: H01R 13/527, H01R 13/622, H04Q 9/00, H04W 4/80, H04L 29/08

(54) **GEHÄUSEDECKEL FÜR EIN FELDGERÄT DER AUTOMATISIERUNGSTECHNIK ZUM DRAHTLOSEN ÜBERMITTELN VON INFORMATIONEN**
HOUSING COVER FOR AN AUTOMATION FIELD DEVICE FOR WIRELESSLY TRANSFERRING INFORMATION
COUVERCLE DE BOÎTIER POUR APPAREIL DE TERRAIN POUR TRANSMISSION SANS FIL D'INFORMATIONS

(30) Priorität: 22.03.2016 DE 102016105362
(43) Veröffentlichungstag der Anmeldung: 30.01.2019
(73) Patentinhaber: Endress+Hauser SE+Co. KG, 79689 Maulburg (DE)
(72) Erfinder: ZENUNI, Armend, 79539 Lörrach (DE); REICHERT, Philipp, 79650 Schopfheim (DE); SCHÄUBLE, Harald, 79541 Lörrach (DE)
(74) Vertreter: Andres, Angelika Maria
(86) Internationale Anmeldenummer: PCT/EP2017/055983
(87) Internationale Veröffentlichungsnummer: WO 2017/162484

(56) Entgegenhaltungen:
- WO-A1-2005/103851
- CA-A1- 2 902 518
- DE-A1- 10 309 886
- DE-A1-102008 043 199

## Beschreibung

Die Erfindung betrifft einen Gehäusedeckel für ein Feldgerät der Automatisierungstechnik zum drahtlosen Übermitteln von Informationen.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Leitsysteme bzw. Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, Prozessvisualisierung, Prozessüberwachung sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt. Daneben ist auch eine Datenübertragung von der übergeordneten Einheit über das Bussystem an die Feldgeräte erforderlich, insbesondere zur Konfigurierung und Parametrierung von Feldgeräten sowie zur Ansteuerung von Aktoren.

Neben einer drahtgebundenen Datenübertragung zwischen den Feldgeräten und der übergeordneten Einheit besteht auch die Möglichkeit einer drahtlosen (wireless) Datenübertragung. Insbesondere in den Bussystemen Profibus®, Foundation Fieldbus® und HART® ist eine drahtlose Datenübertragung über Funk spezifiziert. Ferner sind Funknetzwerke für Sensoren in dem Standard IEEE 802.15.4 näher spezifiziert.

Zur Realisierung einer drahtlosen Datenübertragung sind neuere Feldgeräte, insbesondere Sensoren und Aktoren, teilweise als autarke Funk-Feldgeräte ausgebildet. Diese weisen in der Regel eine drahtlose Kommunikationsschnittstelle und eine Stromquelle als integrale Bestandteile auf. Dabei können die drahtlose Kommunikationsschnittstelle und die Stromquelle in dem Feldgerät selbst oder in einer dauerhaft an dem Feldgerät angeschlossenen Funkeinheit vorgesehen sein. Durch die Stromquelle wird eine autarke Energieversorgung des Feldgerätes ermöglicht.

Daneben besteht die Möglichkeit, Feldgeräte ohne interne drahtlose Kommunikationsschnittstelle - also die installierte Basis - durch die Kopplung mit mindestens einer Funkeinheit zu einem Funk-Feldgerät aufzurüsten. Eine entsprechende Funkeinheit ist beispielsweise in der Druckschrift WO 2005/103851 A1 beschrieben. Die Funkeinheit wird in der Regel an eine Kommunikationsschnittstelle des Feldgerätes lösbar angeschlossen. Über diese Kommunikationsschnittstelle kann das Feldgerät die über das Bussystem zu übermittelnden Daten an die Funkeinheit senden, die diese dann über Funk an den Zielort übermittelt. Umgekehrt kann die Funkeinheit über Funk Daten empfangen und über diese Kommunikationsschnittstelle an das Feldgerät weiterleiten. Die Versorgung des Feldgeräts mit elektrischer Leistung erfolgt dann in der Regel über eine Energieversorgungseinheit der Funkeinheit.

Eine entsprechende Funkeinheit, welche das WirelessHART©-Protokoll unterstützt, wird von der Endress+Hauser Gruppe unter der Bezeichnung "SWA70" produziert und vertrieben.

Die Stromversorgung der Funkeinheit wird dabei in der Regel über eine Batterie bewerkstelligt. Der Wechsel einer Batterie ist insbesondere in explosionsgefährdeten Umgebungen kritisch, da das Gehäuse der Funkeinheit in der Regel geöffnet werden muss. Auch ist die Nachrüstung älterer Feldgeräte schwierig, da mitunter die Verbindungsanschlüsse der Funkeinheit und des Feldgerätes nicht zueinander kompatibel sind. Des Weiteren ist die Verbindung zwischen der Funkeinheit und dem Feldgerät mechanisch wenig robust, wodurch bei oder bei unbeabsichtigter Krafteinwirkung auf die Funkeinheit ein Abbrechen dieser Funkeinheit von dem Feldgerät auftreten kann.

Die DE 10 309 886 A1 offenbart eine Anfügeeinheit, welche einer Prozessteuerungseinheit und/oder anderen Einheit angefügt werden kann, um Datensammelvorgänge, Datenanalysevorgänge und/oder Prozesssteuerungsvorgänge auszuführen. Die Anfügeeinheit kann mit einem Sensor kommunizieren, kann selbst einen Sensor aufweisen und weist einen Prozessor, einen Sender/Empfänger zur drahtlosen Datenübertragung und eine Energieversorgungseinheit zur Versorgung der Anfügeeinheit mit elektrischer Energie auf.

Die CA 290 2518 A1 offenbart eine integrierte Abdeckplatte und ein Sensorsystem ("integrated cover plate & sensor system", ICPSS), sowie eine Vorrichtung zur Befestigung von Sensoren, Bedienelementen und Anzeigen an einer vertikalen Fläche. Das ICPSS beherbergt diese elektronischen Geräte, ein Netzteil und Schnittstellen in einem Gehäuse. Das Gehäuse ist derart konstruiert, dass es direkt an einem elektrischen Schalter oder einer Steckdose montiert werden kann.

Ausgehend von dieser Problematik besteht die Aufgabe der Erfindung darin, einen Gehäusedeckel anzugeben, welcher es erlaubt, ein Feldgerät auf einfache Art und Weise mit einer drahtlosen Kommunikationsmöglichkeit aufzurüsten, sowie eine mechanisch stabile Verbindung mit dem Feldgerät herzustellen.

Die Aufgabe wird durch einen Gehäusedeckel für ein Feldgerät der Automatisierungstechnik zum drahtlosen Übermitteln von Informationen gelöst, umfassend ein Schraubgewinde, eine Empfangs- und Sendeeinheit, eine Batterieeinheit und eine Kommunikationsschnittstelle,
wobei das Schraubgewinde derart ausgestaltet und an dem Gehäusedeckel angeordnet ist, dass der Gehäusedeckel mittels des Schraubgewindes an dem Feldgerät befestigbar ist,
wobei die Empfangs- und Sendeeinheit dazu ausgestaltet ist, die von zumindest einer externen Einheit erzeugten Informationen drahtlos zu empfangen und die von dem Feldgerät erzeugten Informationen zu der externen Einheit zu senden,
wobei die Batterieeinheit dazu ausgestaltet ist, die Empfangs- und Sendeeinheit und/oder das Feldgerät mit elektrischer Energie zu versorgen,
wobei die Kommunikationsschnittstelle des Gehäusedeckels mit der Batterieeinheit, mit der Empfangs- und Sendeeinheit und über eine korrespondierende Kommunikationsschnittstelle des Feldgeräts mit dem Feldgerät in elektrischem Kontakt ist, und
wobei die Kommunikationsschnittstelle des Gehäusedeckels dazu ausgestaltet ist, die Informationen zwischen der Empfangs- und Sendeeinheit und dem Feldgerät über die Kommunikationsschnittstelle und die korrespondierende Kommunikationsschnittstelle des Feldgeräts auszutauschen und elektrische Energie zwischen der Kommunikationsschnittstelle des Gehäusedeckels und der korrespondierenden Kommunikationsschnittstelle des Feldgeräts zu übertragen.

Der erfindungsgemäße Gehäusedeckel bietet eine Reihe von Vorteilen gegenüber den bekannten Lösungen. Die Ausgestaltung in Form eines Gehäusedeckels eines Feldgeräts ermöglicht es, jegliche Arten von Feldgerätetypen mit einer drahtlosen Kommunikationsmöglichkeit nachzurüsten, indem der herkömmliche Gehäusedeckel des Feldgeräts mit dem erfindungsgemäßen Gehäusedeckel ausgetauscht wird. Lediglich die Dimensionen des Schraubgewindes müssen an den jeweiligen Feldgerätetyp angepasst sein. Die Verbindung des Gerätedeckels ist außerdem durch die verwendete Schraubverbindung mechanisch sehr robust.

Als Empfangs- und Sendeeinheit kann insbesondere eine Antenne vorgesehen sein. Je nach Funkstandard- bzw. Funkprotokoll, über welches die Informationen ausgetauscht werden sollen, kann die Funkeinheit auch als Spule ausgestaltet sein, beispielsweise, falls NFC oder RFID verwendet werden soll.

Die externe Einheit kann beispielsweise durch einen Router, bspw. in Form eines Gateways dargestellt sein. Alternativ kann es sich bei der externen Einheit um ein weiteres drahtloskommunikationsfähiges Feldgerät oder um eine Rechnereinheit handeln. Bei der Rechnereinheit, die beispielsweise zum Konfigurieren und/oder Parametrieren des Feldgeräts mittels drahtloser Kommunikation ausgestaltet ist, kann es sich beispielsweise um eine stationäre Rechnereinheit, beispielsweise um einen Service-PC oder aber auch um eine mobile Rechnereinheit, insbesondere um ein mobiles Endgerät, wie ein Smartphone oder ein Tablet handeln.

Bei den gesendeten Informationen handelt es sich insbesondere um vom Feldgerät erzeugte Informationen, wie beispielsweise Prozessmesswerte oder Diagnosedaten. Bei den empfangenen Informationen handelt es sich insbesondere um Steuerbefehle oder Konfigurations-/Parametrierungsbefehle.

In einer besonders bevorzugten Ausgestaltung des erfindungsgemäßen Gehäusedeckels ist vorgesehen, dass der Gehäusedeckel eine Verschlusskomponente aufweist, welche den Gehäusedeckel an dem dem Feldgerät zugewandten Endbereich des Gehäusedeckels verschließt und wobei an der Verschlusskomponente zumindest eine Öffnung vorgesehen ist, über die die Kommunikationsschnittstelle des Gehäusedeckels mit der korrespondierenden Kommunikationsschnittstelle des Feldgeräts elektrisch kontaktierbar ist. Durch die Öffnung muss der Gehäusedeckel selbst nicht geöffnet werden, um die Kommunikationsschnittstelle des Gehäusedeckels mit der korrespondierenden Kommunikationsschnittstelle des Feldgeräts elektrisch zu kontaktieren.

Die Verschlusskomponente kann hierbei becherförmig ausgestaltet sein. Über einen Einrastmechanismus kann die Verschlusskomponente fest an dem dem Feldgerät zugewandten Endbereich des Gehäusedeckels befestigt sein.

In einer ersten Variante des erfindungsgemäßen Gehäusedeckels ist vorgesehen, dass die Verschlusskomponente derart mit dem Gehäusedeckel vergossen ist, dass der Gehäusedeckel für den Einsatz in explosionsgefährdeter Umgebung geeignet ist. In explosionsgefährdeter Umgebung, beispielsweise in einer Umgebung mit entzündlichen Gasen, kann es hierdurch zu keinem Funkenschlag und einer daraus resultierenden Entzündung der Gase kommen, da das Innere des Gehäusedeckels, insbesondere die Batterieeinheit, nicht in Kontakt mit den Gasen kommen kann. Als zusätzlicher Schutz kann eine Schutzschaltung vorgesehen sein, die zwischen der Kommunikationsschnittstelle des Gehäusedeckels und der Batterieeinheit angeordnet ist. Diese limitiert den maximal verfügbaren Stromfluss an der Kommunikationsschnittstelle derart, dass eine Entzündung der Gase ausgeschlossen ist.

Bei einem notwendigen Batteriewechsel kann der vergossene Gehäusedeckel als gesamte Einheit ausgewechselt werden. Dabei ist vorgesehen, dass der Austausch des Gehäusedeckels in explosionsgefährdeter Umgebung möglich ist, indem beim Befestigen und Lösen des Gehäusedeckels kein Funkenschlag an der Kommunikationsschnittstelle des Gehäusedeckels, bzw. an der korrespondierenden Gehäuseschnittstelle des Feldgeräts, bzw. an deren Kontaktierungen, welche als Federkontaktstifte oder Steckkontakte ausgestaltet sind, auftritt.

In einer vorteilhaften Ausgestaltung des erfindungsgemäßen Gehäusedeckels ist vorgesehen, dass die Kommunikationsschnittstelle des Gehäusedeckels oder die korrespondierende Kommunikationsschnittstelle des Feldgeräts zumindest einen Federkontakt oder einen Steckkontakt zur Kontaktierung der Kommunikationsschnittstelle des Gehäusedeckels mit der korrespondierenden Kommunikationsschnittstelle des Feldgeräts aufweist, welcher durch die Öffnung der Verschlusskomponente geführt ist und welcher aus der Verschlusskomponente herausragt. Dies ist insbesondere dadurch vorteilhaft, dass der Gerätedeckel zur Verbindung mit einem Feldgerät nicht geöffnet werden muss. Die Verbindung kann auf einfache und schnelle Art zuverlässig hergestellt werden.

Gemäß einer vorteilhaften Weiterbildung des erfindungsgemäßen Gehäusedeckels ist zumindest eine Kabelverbindung vorgesehen, welche durch die Öffnung der Verschlusskomponente geführt ist und welche die Kommunikationsschnittstelle des Gehäusedeckels mit der Kommunikationsschnittstelle des Feldgeräts verbindet. Insbesondere Feldgeräte, deren korrespondierende Kommunikationsschnittstelle nicht in der Nähe des Gehäusedeckels angeordnet ist, können dadurch auf einfache Art und Weise mit dem Gehäusedeckel elektrisch kontaktiert werden.

In einer zweiten Variante des erfindungsgemäßen Gehäusedeckels ist vorgesehen, dass die Batterieeinheit aus einer Batterie und einer Batteriehalterung besteht und dass die Batterie und die Batteriehalterung vergossen sind. In diesem Fall ist die Verschlusskomponente nicht mit dem Gehäusedeckel vergossen. Die Batterieeinheit kann bei Bedarf auf einfache Art und Weise gewechselt werden. Das Vergießen der Batterieeinheit verhindert einen Funkenschlag, wodurch eine sichere Anwendung des erfindungsgemäßen Gehäusedeckels im explosionsgefährdeten Bereich gewährleistet ist.

Gemäß einer vorteilhaften Weiterbildung des erfindungsgemäßen Gehäusedeckels ist eine Elektronik zur Steuerung der Empfangs- und Sendeeinheit im Gehäusedeckel vorgesehen, welche von der Batterieeinheit oder von dem Feldgerät mit elektrischer Energie versorgt wird und welche mit der korrespondierenden Kommunikationsschnittstelle des Feldgeräts und der Empfangs- und Sendeeinheit in elektrischem Kontakt ist. Dies ist insbesondere dann vorteilhaft, wenn es sich bei dem Feldgerät um ein älteres Exemplar handelt, dessen Elektronik nicht zur Konvertierung von Protokollen gemäß einem Drahtlosprotokoll geeignet ist. Die Elektronik im Gehäusedeckel kann die Konvertierung der zu sendenden Informationen gemäß einem Drahtlosprotokoll vornehmen, bzw. empfangene Informationen auswerten und an das Feldgerät weiterleiten.

Gemäß einer alternativen Weiterbildung des erfindungsgemäßen Gehäusedeckels ist eine Elektronik zur Steuerung der Empfangs- und Sendeeinheit im Feldgerät vorgesehen, welche von der Batterieeinheit oder von dem Feldgerät mit elektrischer Energie versorgt wird und mit der korrespondierenden Kommunikationsschnittstelle des Feldgeräts in elektrischem Kontakt ist.

Eine bevorzugte Weiterbildung des erfindungsgemäßen Gerätedeckels sieht vor, dass ein Bedien-/Anzeigeelement zum Bedienen des Feldgeräts und/oder zur Anzeige der feldgeräterelevanten Informationen im Gehäusedeckel vorgesehen ist, wobei das Bedien-/Anzeigeelement von der Batterieeinheit oder von dem Feldgerät mit elektrischer Energie versorgt wird. Zur Anzeige wird bevorzugt ein Display verwendet. Die Bedienung des Feldgeräts erfolgt insbesondere über ein berührungssensitives Display oder über Eingabeelemente wie Knöpfe oder Tasten, die an dem Bedien-/Anzeigeelement angebracht sind.

In einer vorteilhaften Weiterbildung des erfindungsgemäßen Gehäusedeckels ist vorgesehen, dass der Gehäusedeckel zumindest teilweise aus einem metallischen Material gefertigt ist. Die Verwendung eines metallischen Materials gewährleistet eine hohe mechanische Robustheit und eine gute elektromagnetische Abschirmung.

Eine vorteilhafte Ausgestaltung des erfindungsgemäßen Gehäusedeckels sieht vor, dass die Sende- und Empfangseinheit außerhalb des Gehäusedeckels angeordnet ist. Dies ist insbesondere in dem Fall sinnvoll, in welchem der Gehäusedeckel zu großen Teilen aus einem metallischen Material gefertigt ist. Die Verwendung eines metallischen Materials schwächt das ausgesendete Signal der Sende- und Empfangseinheit ab. Aus diesem Grund kann die Sende- und Empfangseinheit außerhalb des Gehäusedeckels angeordnet sein und über eine weitere Öffnung mit dem Inneren des Gehäusedeckels, insbesondere mit der Elektronik des Gehäusedeckels und/oder der Kommunikationsschnittstelle des Gehäusedeckels, elektrisch kontaktiert sein.

In einer bevorzugten Weiterbildung des erfindungsgemäßen Gehäusedeckels ist vorgesehen, dass der Gehäusedeckel zumindest teilweise aus einem Kunststoffmaterial gefertigt ist. Die Verwendung eines Kunststoffmaterials gewährleistet eine kostengünstige Fertigung des Gehäusedeckels mit niedrigen Materialkosten. Des Weiteren kann das Kunststoffmaterial so ausgestaltet sein, dass eine Korrosionsbeständigkeit des Gehäusedeckels gegen aggressive Umwelteinflüsse gewährleistet ist.

Falls der Gehäusedeckel überwiegend aus einem metallischen Material gefertigt ist, kann eine Komponente aus einem Kunststoffmaterial oder einem ähnlichen nichtmetallischen Material vorgesehen sein, hinter der die Sende- und Empfangseinheit angeordnet ist. Durch diese Komponente kann das Signal der Sende- und Empfangseinheit austreten, bzw. von der externen Einheit ausgesandte Signale eintreten.

Falls der Gehäusedeckel überwiegend aus einem Kunststoffmaterial gefertigt ist, kann die Sende- und Empfangseinheit direkt in den Gehäusedeckel, insbesondere in eine Wand des Gehäusedeckels integriert sein.

Ebenso kann vorgesehen sein, ein metallisches Material und ein Kunststoffmaterial zu kombinieren. Beispielsweise kann ein metallischer Gehäusedeckelkern vorgesehen sein, welcher auf seiner nach außen gerichteten Fläche und auf seiner nach innen gerichteten Fläche allseitig von einem Kunststoffmantel umgeben ist. Diese Kombination gewährleistet zum einen die mechanische Stabilität des metallischen Materials, zum anderen die korrosionsbeständigen Eigenschaften des Kunststoffmaterials.

Gemäß einer besonders bevorzugten Ausgestaltung des erfindungsgemäßen Gehäusedeckels ist vorgesehen, dass die Sende- und Empfangseinheit dazu ausgestaltet ist, die feldgeräterelevanten Informationen über ein Drahtlosnetzwerkprotokoll, insbesondere WLAN, WirelessHART, Bluetooth, Zigbee und/oder NFC/RFID, zu senden und/oder zu empfangen. Prinzipiell können alle gängigen Drahtlosnetzwerkprotokolle vorgesehen sein.

Die Erfindung wird anhand der nachfolgenden Figur näher erläutert. Es zeigt
Fig. 1: ein erstes Ausführungsbeispiels des erfindungsgemäßen Gehäusedeckels für den Einsatz in einer explosionsgefährdeten Umgebung; und
Fig. 2: ein zweites Ausführungsbeispiel des erfindungsgemäßen Gehäusedeckels.

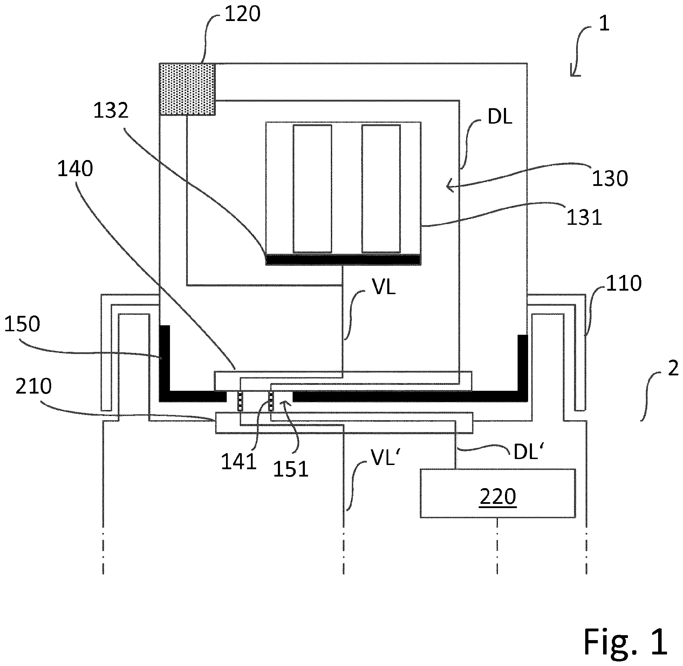

Fig. 1 zeigt ein erstes Ausführungsbeispiel des erfindungsgemäßen Gehäusedeckels 1 für den Einsatz in einer explosionsgefährdeten Umgebung. Der Gehäusedeckel 1 ist aus einem metallischen Material gefertigt. Im Inneren des Gehäusedeckels 1 befindet sich eine Empfangs- und Sendeeinheit 120, welche an der Wand des Gehäusedeckels 1 befestigt ist. Da Metall eine abschwächende Wirkung auf die von der Sende- und Empfangseinheit 120 gesendeten Signale, beziehungsweise auf die von dieser empfangenen Signale hat, enthält der Teilabschnitt der Wand des Gehäusedeckels 1, an welcher die Sende- und Empfangseinheit 120 befestigt ist, eine nichtmetallische Komponente. Diese kann beispielsweise aus einem Kunststoffmaterial bestehen. Alternativ kann die Sende- und Empfangseinheit 120 außerhalb des Gehäusedeckels 1 angeordnet sein und über ein Kabel, welches durch eine Öffnung in der Wand des Gehäusedeckels 1 geführt ist, mit dem Inneren des Gehäusedeckels 1 verbunden sein.

Die Sende- und Empfangseinheit 120 ist dazu ausgestaltet, Signale, beziehungsweise Informationen, nach einem Drahtlosnetzwerkprotokoll, insbesondere WLAN, WirelessHART©, Bluetooth©, Zigbee© und/oder NFC/RFID, zu senden und/oder zu empfangen. Prinzipiell können alle gängigen Drahtlosnetzwerkprotokolle zur Verwendung vorgesehen sein.

Zur Energieversorgung der Sende- und Empfangseinheit 120 befindet sich eine Batterieeinheit 130 im Inneren des Gehäusedeckels 1, welche mit der Sende- und Empfangseinheit 120 über eine Versorgungsleitung VL in elektrischem Kontakt steht. Die Batterieeinheit 130 besteht aus einer Batterie 131, welche in eine Batteriehalterung 132 eingesetzt ist. Es kann alternativ vorgesehen sein, eine Batterie 131 mit Lötkontakten zu verwenden, welche fest mit der Batteriehalterung 132 verbunden ist. Ebenso kann vorgesehen sein, die Batterie 131 mit der Batteriehalterung zu vergießen.

Die Sende- und Empfangseinheit 120 und die Batterieeinheit 130 sind über separate Versorgungsleitungen VL, beziehungsweise Datenleitungen DL mit einer im Gehäusedeckel befindlichen Kommunikationsschnittstelle 140 verbunden. Diese dient zur Verbindung mit einer korrespondierenden Kommunikationsschnittstelle 210 eines Feldgeräts 2, auf welchen der Gehäusedeckel 1 aufgeschraubt wird.

Mittels eines Verschlusselements 150 wird der Gehäusedeckel 1 an seinem dem Feldgerät 2 zugewandten Endbereich verschlossen. Es ist lediglich eine Öffnung 151 zur Kontaktierung der Kommunikationsschnittstelle 140 des Gehäusedeckels mit der korrespondierenden Kommunikationsschnittstelle 210 des Feldgeräts 2 vorgesehen. Diese Kontaktierung wird in diesem Falle über Federkontaktstifte 141 realisiert, die auf der Kommunikationsschnittstelle 140 des Gehäusedeckels 1 angebracht sind und durch die Öffnung 151 aus dem Gehäusedeckel herausragt. Alternativ erfolgt die elektrische Kontaktierung mittels Steckkontakten.

Das Verschlusselement 150 ist in der in Fig. 1 dargestellten Ausgestaltung des erfindungsgemäßen Gehäusedeckels 1 als becherförmiges Element, bestehend aus einem metallischen Material, ausgestaltet. Dieses wird vollständig mit dem Gehäusedeckel 1 vergossen, so dass ein Öffnen des Gehäusedeckels 1 nicht möglich ist.

Mittels eines am Gehäusedeckels 1 befindlichen Schraubgewindes 110 wird der Gehäusedeckel 1 am Feldgerät 2 befestigt. Hierfür wird der herkömmliche Gehäusedeckel des Feldgeräts 2 abgeschraubt und mit dem erfindungsgemäßen Gehäusedeckel 1 ersetzt. Besitzt das Feldgerät 2 ein Zweikammergehäuse, mit einem ersten und einem zweiten Gehäuseraum, wobei beide Gehäuseräume mit einem separaten Gehäusedeckel verschlossen sind, so kann der erfindungsgemäße Gehäusedeckel 2 einen beliebigen herkömmlichen Gehäusedeckel ersetzen. Das Schraubgewinde 110 kann dabei entweder als Außengewinde oder als Innengewinde ausgestaltet sein. Über eine Arretierung, beispielsweise in Form einer Deckelkralle, erfährt der Gehäusedeckel 1 eine zusätzliche mechanische Befestigung am Feldgerät.

Dabei wird die Kommunikationsschnittstelle 140 des Gehäusedeckels 1 mit der korrespondierenden Kommunikationsschnittstelle 210 des Feldgeräts elektrisch verbunden. An diese korrespondierenden Kommunikationsschnittstelle 210 des Feldgeräts 2 sind Datenleitungen DL' und Versorgungsleitungen VL' des Feldgeräts kontaktiert. Die Batterieeinheit 130 kann über die Versorgungsleitungen VL, VL' somit auch das Feldgerät 2 mit elektrischer Energie versorgen.

In dem Feldgerät 2 ist eine Elektronik 220 vorgesehen. Diese dient zum Ansteuern der Sende- und Empfangseinheit 120 und ist mit dieser über Datenleitungen DL, DL' verbunden. Diese Elektronik 220 kann entweder vom Feldgerät 2 selbst, oder von der Batterieeinheit 130 des Gehäusedeckels 1 mit Energie versorgt werden.

Durch das Vergießen des Gehäusedeckels 1 mit dem Verschlusselement 150 ist der Gehäusedeckel 1 zum Einsatz in explosionsgefährdeter Umgebung geeignet. Ist die Kapazität der Batterieeinheit 130 erschöpft, so kann der gesamte Gehäusedeckel 1 ausgetauscht werden. Dieser Austausch kann ebenfalls in der explosionsgefährdeten Umgebung durchgeführt werden, was mit herkömmlichen Funkadaptern für Feldgeräte 2, bei denen das Gehäuse geöffnet und die Batterie ausgetauscht werden muss, aufgrund der Gefahr eines Funkenschlags nicht möglich ist.

Mithilfe des erfindungsgemäßen Gehäusedeckels 1 ist es möglich, ein Feldgerät 2 derart aufzurüsten, dass es zur drahtlosen Kommunikation, also zum Empfangen und Versenden von Informationen, mit einer hier nicht gezeigten externen Einheit verwendet werden kann. Bei der externen Einheit kann es sich beispielsweise um einen Drahtlosrouter, bspw. in Form eines Gateways handeln. Alternativ kann es sich bei der externen Einheit um ein weiteres Feldgerät 2 oder um eine Rechnereinheit handeln. Bei der Rechnereinheit, die beispielsweise zum Konfigurieren und/oder Parametrieren des Feldgeräts 2 mittels drahtloser Kommunikation ausgestaltet ist, kann es sich beispielsweise um eine stationäre Rechnereinheit, beispielsweise um einen Service-PC oder aber auch um eine mobile Rechnereinheit, insbesondere um ein mobiles Endgerät, wie ein Smartphone oder ein Tablet handeln.

Bei den gesendeten Informationen kann es sich insbesondere um vom Feldgerät 2 erzeugte Informationen, wie beispielsweise Prozessmesswerte oder Diagnosedaten handeln. Bei den empfangenen Informationen handelt es sich insbesondere um Steuerbefehle oder Konfigurations-/Parametrierungsbefehle.

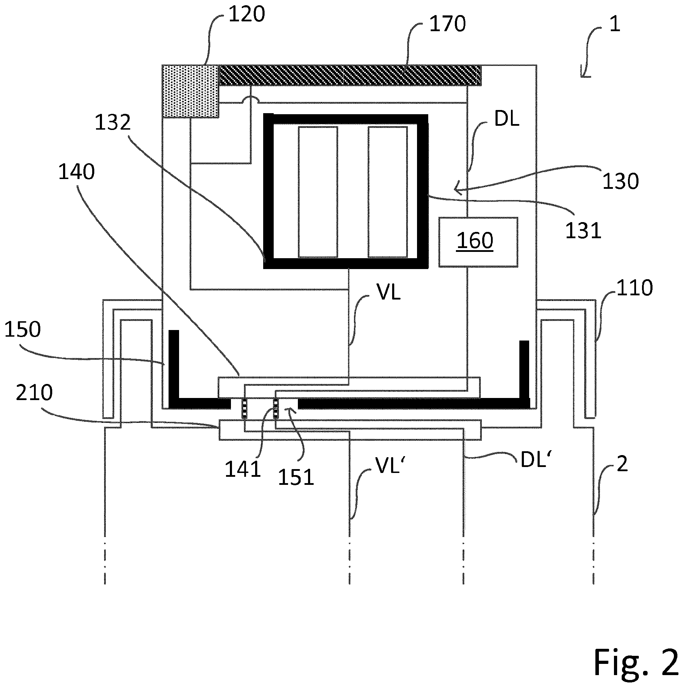

Fig. 2 zeigt ein zweites, alternatives Ausführungsbeispiel des erfindungsgemäßen Gehäusedeckels. Im Gegensatz zum dem in Fig 1 gezeigten Gehäusedeckel 1 besteht der in Fig. 2 gezeigte Gehäusedeckel aus einem Kunststoffmaterial.

Das Verschlusselement 150 ist hierbei lediglich mechanisch mit dem Gehäusedeckel 1 verbunden, beispielsweise über einen Einrastmechanismus. Der Gehäusedeckel 1 kann daher im Gegensatz zum dem in Fig 1 gezeigten Gehäusedeckel 1 geöffnet werden. Diese Variante ist insbesondere für den Einsatz in einer nicht-explosionsgefährdeten Umgebung geeignet.

Zusätzlich zu den Komponenten 120, 130, 140, welche in der in Fig. 1 gezeigten Ausgestaltung des Gehäusedeckels 1 enthalten sind, befindet sich ein Bedien-/Anzeigeelement 170 in dem Gehäusedeckel 1. Dieses dient zur Anzeige der zu sendenden Information oder der empfangenen Informationen, insbesondere über ein Display. Es können aber auch beliebige weitere feldgerätrelevante Informationen angezeigt werden. Um das Bedien-/Anzeigeelement 170 in dem Gehäusedeckel 1 sichtbar zu machen, kann dieser in seinem von dem Feldgerät abgewandten Endbereich ein Schauglas integriert haben. Des Weiteren dient das Bedien-/Anzeigeelement 170 zur Bedienung des Feldgeräts 2, insbesondere über ein berührungssensitives Display oder über Eingabeelemente wie Knöpfe oder Tasten. Das Bedien-/Anzeigeelement 170 ist ebenso wie die Sende- und Empfangseinheit 120 mit der Datenleitung DL verbunden. Die Energieversorgung des Bedien-/Anzeigeelements 170 erfolgt über die Batterieeinheit 130 des Gehäusedeckels, wobei in diesem Ausführungsbeispiel die Batterie 131 mit der Batteriehalterung 132 vergossen ist, oder über das Feldgerät 2 selbst.

Des Weiteren befindet sich eine Elektronik 160 im Gehäusedeckel. Diese Elektronik 160 dient zum Konvertieren der zu sendenden Informationen gemäß einem Drahtlosprotokoll, bzw. zum Auswerten und Weiterleiten der über die Sende- und Empfangseinheit 120 empfangenen Informationen an das Feldgerät 2.

Neben diesen in Fig. 1 und Fig. 2 gezeigten Ausführungsbeispielen des erfindungsgemäßen Gehäusedeckels 1 sind eine Vielzahl zusätzlicher Ausführungen auf Basis der Kombinationen der Bauteile möglich.

### Bezugszeichenliste

- 1: Gehäusedeckel
- 110: Schraubgewinde
- 120: Sende- und Empfangseinheit
- 130: Batterieeinheit
- 131: Batterie
- 132: Batteriehalterung
- 140: Kommunikationsschnittstelle
- 141: Federkontakt
- 142: Steckkontakt
- 150: Verschlusskomponente
- 151: Öffnung der Verschlusskomponente
- 160: Elektronik im Gehäusedeckel
- 170: Bedien-/Anzeigeelement
- 2: Server
- 210: korrespondierende Kommunikationsschnittstelle
- 220: Elektronik im Feldgerät
- DL, DL': Datenleitungen
- VL, VL': Versorgungsleitungen

## Patentansprüche

1. Gehäusedeckel (1) für ein Feldgerät (2) der Automatisierungstechnik zum drahtlosen Übermitteln von Informationen, umfassend ein Schraubgewinde (110), eine Sende- und Empfangseinheit (120), eine Batterieeinheit (130) und eine Kommunikationsschnittstelle (140),
wobei das Schraubgewinde (110) derart ausgestaltet und an dem Gehäusedeckel (1) angeordnet ist, dass der Gehäusedeckel (1) mittels des Schraubgewindes (110) an dem Feldgerät (2) befestigbar ist,
wobei die Sende- und Empfangseinheit (120) dazu ausgestaltet ist, die von zumindest einer externen Einheit erzeugten Informationen drahtlos zu empfangen und die von dem Feldgerät (2) erzeugten Informationen zu der externen Einheit (3) zu senden,
wobei die Batterieeinheit (130) dazu ausgestaltet ist, die Sende- und Empfangseinheit (120) und/oder das Feldgerät (2) mit elektrischer Energie zu versorgen,
wobei die Kommunikationsschnittstelle (140) des Gehäusedeckels (1) mit der Batterieeinheit (130), mit der Sende- und Empfangseinheit (120) und über eine korrespondierende Kommunikationsschnittstelle (210) des Feldgeräts (2) mit dem Feldgerät (2) in elektrischem Kontakt ist, und
wobei die Kommunikationsschnittstelle (140) des Gehäusedeckels (1) dazu ausgestaltet ist, die Informationen zwischen der Sende- und Empfangseinheit (120) und dem Feldgerät (2) über die Kommunikationsschnittstelle (140) und die korrespondierende Kommunikationsschnittstelle (210) des Feldgeräts (2) auszutauschen und elektrische Energie zwischen der Kommunikationsschnittstelle (140) des Gehäusedeckels (1) und der korrespondierenden Kommunikationsschnittstelle (210) des Feldgeräts (2) zu übertragen.

2. Gehäusedeckel (1) nach Anspruch 1, wobei der Gehäusedeckel (1) eine Verschlusskomponente (150) aufweist, welche den Gehäusedeckel (1) an dem dem Feldgerät (2) zugewandten Endbereich des Gehäusedeckels (1) verschließt und wobei an der Verschlusskomponente (150) zumindest eine Öffnung (151) vorgesehen ist, über die die Kommunikationsschnittstelle (140) des Gehäusedeckels (1) mit der korrespondierenden Kommunikationsschnittstelle (210) des Feldgeräts (2) elektrisch kontaktierbar ist.

3. Gehäusedeckel (1) nach Anspruch 2, wobei die Verschlusskomponente (150) derart mit dem Gehäusedeckel (1) vergossen ist, dass der Gehäusedeckel (1) für den Einsatz in explosionsgefährdeter Umgebung geeignet ist.

4. Gehäusedeckel (1) nach zumindest einem der Ansprüche 2 oder 3, wobei die Kommunikationsschnittstelle (140) des Gehäusedeckels oder die korrespondierende Kommunikationsschnittstelle (210) des Feldgeräts zumindest einen Federkontakt (141) oder einen Steckkontakt (141) zur Kontaktierung der Kommunikationsschnittstelle (140) des Gehäusedeckels mit der korrespondierenden Kommunikationsschnittstelle (210) des Feldgeräts (1) aufweist, welcher durch die Öffnung (151) der Verschlusskomponente (150) geführt ist und welcher aus der Verschlusskomponente (150) herausragt.

5. Gehäusedeckel (1) nach zumindest einem der Ansprüche 2 oder 3, wobei zumindest eine Kabelverbindung vorgesehen ist, welche durch die Öffnung (151) der Verschlusskomponente (150) geführt ist und welche die Kommunikationsschnittstelle (140) des Gehäusedeckels (1) mit der Kommunikationsschnittstelle (210) des Feldgeräts (2) verbindet.

6. Gehäusedeckel (1) nach zumindest einem der Ansprüche 1, 2, 4 oder 5, wobei die Batterieeinheit (130) aus einer Batterie (131) und einer Batteriehalterung (132) besteht und wobei die Batterie (131) und die Batteriehalterung (132) vergossen sind.

7. Gehäusedeckel (1) nach zumindest einem der vorherigen Ansprüche, wobei im Gehäusedeckel (1) eine Elektronik (160) zur Steuerung der Sende- und Empfangseinheit (120) vorgesehen ist, welche von der Batterieeinheit (130) oder von dem Feldgerät (2) mit elektrischer Energie versorgt wird und welche mit der korrespondierenden Kommunikationsschnittstelle (210) des Feldgeräts (2) und mit der Sende- und Empfangseinheit (120) in elektrischem Kontakt ist.

8. Gehäusedeckel (1) nach zumindest einem der Ansprüche 1 bis 6, wobei im Feldgerät eine Elektronik (220) zur Steuerung der Sende- und Empfangseinheit (120) vorgesehen ist, welche von der Batterieeinheit (130) oder von dem Feldgerät (2) mit elektrischer Energie versorgt wird und mit der korrespondierenden Kommunikationsschnittstelle (210) des Feldgeräts (2) in elektrischem Kontakt ist.

9. Gehäusedeckel (1) nach zumindest einem der vorherigen Ansprüche, wobei im Gehäusedeckel (1) ein Bedien-/Anzeigeelement (170) zum Bedienen des Feldgeräts (2) und/oder zur Anzeige der feldgeräterelevanten Informationen vorgesehen ist, wobei das Bedien-/Anzeigeelement (170) von der Batterieeinheit (130) oder von dem Feldgerät (2) mit elektrischer Energie versorgt wird.

10. Gehäusedeckel (1) nach zumindest einem der vorherigen Ansprüche, wobei der Gehäusedeckel (1) zumindest teilweise aus einem metallischen Material gefertigt ist.

11. Gehäusedeckel (1) nach Anspruch 10, wobei die Sende- und Empfangseinheit (120) außerhalb des Gehäusedeckels (1) angeordnet ist.

12. Gehäusedeckel (1) nach zumindest einem der Ansprüche 1 bis 9, wobei der Gehäusedeckel (1) zumindest teilweise aus einem Kunststoffmaterial gefertigt ist.

13. Gehäusedeckel (1) nach zumindest einem der vorherigen Ansprüche, wobei die Sende- und Empfangseinheit (120) dazu ausgestaltet ist, die feldgeräterelevanten Informationen nach einem Drahtlosnetzwerkprotokoll, insbesondere WLAN, WirelessHART, Bluetooth, Zigbee und/oder NFC/RFID, zu senden und/oder zu empfangen.

## Claims

1. Housing cover (1) for a field device (2) used in automation engineering for the wireless transmission of information, said cover comprising a screw thread (110), a transmission and reception unit (120), a battery unit (130) and a communication interface (140),
wherein the screw thread (110) is designed and arranged on the housing cover (1) in such a way that the housing cover (1) can be secured to the field device (2) by means of the screw thread (110),
wherein the transmission and reception unit (120) is designed to wirelessly receive information generated by at least one external unit and to send information generated by the field device (2) to the external unit (3),
wherein the battery unit (130) is designed to supply electrical energy to the transmission and reception unit (120) and/or the field device (2),
wherein the communication interface (140) of the housing cover (1) is in electrical contact with the battery unit (130), with the transmission and reception unit (120) and, via a corresponding communication interface (210) of the field device (2), with the field device (2), and
wherein the communication interface (140) of the housing cover (1) is designed to exchange information between the transmission and reception unit (120) and the field device (2) via the communication interface (140) and the corresponding communication interface (210) of the field device (2), and to transmit electrical energy between the communication interface (140) of the housing cover (1) and the corresponding communication interface (240) of the field device (2).

2. Housing cover (1) as claimed in Claim 1, wherein the housing cover (1) has a locking component (150), which seals the housing cover (1) at the end area of the housing cover (1) facing towards the field device (2), and wherein at least one opening (151) is provided on the locking component (150) via which the communication interface (140) of the housing cover (1) can be put into electrical contact with the corresponding communication interface (210) of the field device (2).

3. Housing cover (1) as claimed in Claim 2, wherein the locking component (150) is molded with the housing cover (1) in such a way that the housing cover (1) is suitable for use in an explosive environment.

4. Housing cover (1) as claimed in at least one of the Claims 2 or 3, wherein the communication interface (140) of the housing cover or the corresponding communication interface (210) of the field device has at least one spring contact (141) or a plug contact (141) designed to put the communication interface (140) of the housing cover into contact with the corresponding communication interface (210) of the field device (2), said contact being routed through the opening (151) of the locking component (150) and projecting out of the locking component (150).

5. Housing cover (1) as claimed in at least one of the Claims 2 or 3, wherein at least a cable connection is provided, said cable being routed through the opening (151) of the locking component (150) and connecting the communication interface (140) of the housing cover (1) with the communication interface (210) of the field device (2).

6. Housing cover (1) as claimed in at least one of the Claims 1, 2, 4 or 5, wherein the battery unit (130) consists of a battery (131) and a battery holder (132), and wherein the battery (131) and the battery holder (132) are molded.

7. Housing cover (1) as claimed in at least one of the previous claims, wherein an electronics unit (160) for controlling the transmission and reception unit (120) is provided in the housing cover (1), said electronics unit (160) being supplied with electrical energy by the battery unit (130) or by the field device (2) and wherein said electronics unit is in electrical contact with the corresponding communication interface (210) of the field device (2) and the transmission and reception unit (120).

8. Housing cover (1) as claimed in at least one of the previous claims, wherein an electronics unit (220) for controlling the transmission and reception unit (120) is provided in the field device, said electronics unit (220) being supplied with electrical energy by the battery unit (130) or by the field device (2) and wherein said electronics unit is in electrical contact with the corresponding communication interface (210) of the field device (2).

9. Housing cover (1) as claimed in at least one of the previous claims, wherein an operating/display element (170) is provided in the housing cover (1), said element being designed to operate the field device (2) and/or to display the information that is relevant for the field device, wherein the operating/display element (170) is supplied with electrical energy by the battery unit (130) or by the field device (2).

10. Housing cover (1) as claimed in at least one of the previous claims, wherein the housing cover (1) is at least partially made from a metal material.

11. Housing cover (1) as claimed in Claim 10, wherein the transmission and reception unit (120) is arranged outside the housing cover (1).

12. Housing cover (1) as claimed in at least one of the Claims 1 to 9, wherein the housing cover (1) is at least partially made from a plastic material.

13. Housing cover (1) as claimed in at least one of the previous claims, wherein the transmission and reception unit (120) is designed to send and/or receive the information which is relevant for the field device according to a wireless network protocol, particularly WLAN, WirelessHART, Bluetooth, Zigbee and/or NFC/RFID.

## Revendications

1. Couvercle de boîtier (1) pour un appareil de terrain (2) de la technique d'automatisation destiné à la transmission sans fil d'informations, lequel couvercle comprend un filetage (110), une unité d'émission et de réception (120), une unité de batterie (130) et une interface de communication (140),
le filetage (110) étant conçu et disposé sur le couvercle de boîtier (1) de telle sorte que le couvercle de boîtier (1) puisse être fixé au moyen du filetage (110) sur l'appareil de terrain (2),
l'unité d'émission et de réception (120) étant conçue de telle sorte à recevoir sans fil les informations générées par au moins une unité externe et à émettre les informations générées par l'appareil de terrain (2) à une unité externe (3),
l'unité de batterie (130) étant conçue de telle sorte à alimenter en énergie électrique l'unité d'émission et de réception (120) et/ou l'appareil de terrain (2), l'interface de communication (140) du couvercle de boîtier (1) étant en contact électrique avec l'unité de batterie (130), avec l'unité d'émission et de réception (120) et, via une interface de communication (210) correspondante de l'appareil de terrain (2), avec l'appareil de terrain (2), et
l'interface de communication (140) du couvercle de boîtier (1) étant conçue de telle sorte à échanger les informations entre l'unité d'émission et de réception (120) et l'appareil de terrain (2) via l'interface de communication (140) et l'interface de communication (210) correspondante de l'appareil de terrain (2), et à transmettre l'énergie électrique entre l'interface de communication (140) du couvercle de boîtier (1) et l'interface de communication (240) correspondante de l'appareil de terrain (2).

2. Couvercle de boîtier (1) selon la revendication 1, pour lequel le couvercle de boîtier (1) comporte un composant de fermeture (150), lequel composant ferme le couvercle de boîtier (1) au niveau de la zone d'extrémité du couvercle de boîtier (1) faisant face à l'appareil de terrain (2), et pour lequel est prévue, sur le composant de fermeture (150), au moins une ouverture (151), par l'intermédiaire de laquelle l'interface de communication (140) du couvercle de boîtier (1) peut être mise en contact électrique avec l'interface de communication (210) correspondante de l'appareil de terrain (2).

3. Couvercle de boîtier (1) selon la revendication 2, pour lequel le composant de fermeture (150) est moulé avec le couvercle de boîtier (1), si bien que le couvercle de boîtier (1) est adapté pour une utilisation dans un environnement explosible.

4. Couvercle de boîtier (1) selon au moins l'une des revendications 2 ou 3, pour lequel l'interface de communication (140) du couvercle de boîtier ou l'interface de communication (210) correspondante de l'appareil de terrain comporte au moins un contact à ressort (141) ou un contact enfichable (141) destiné à mettre en contact l'interface de communication (140) du couvercle de boîtier avec l'interface de communication (210) correspondante de l'appareil de terrain (2), laquelle interface est guidée à travers l'ouverture (151) du composant de fermeture (150) et qui fait saillie à partir du composant de fermeture (150).

5. Couvercle de boîtier (1) selon au moins l'une des revendications 2 ou 3, pour lequel est prévue au moins une liaison par câble, lequel câble est guidé à travers l'ouverture (151) du composant de fermeture et lequel câble relie l'interface de communication (140) du couvercle de boîtier (1) avec l'interface de communication (210) de l'appareil de terrain (2).

6. Couvercle de boîtier (1) selon au moins l'une des revendications 1, 2, 4 ou 5, pour lequel l'unité de batterie (130) se compose d'une batterie (131) et d'un support de batterie (132), et
pour lequel la batterie (131) et le support de batterie (132) sont moulés.

7. Couvercle de boîtier (1) selon au moins l'une des revendications précédentes, pour lequel est prévu, dans le couvercle de boîtier (1), une électronique (160) destinée à la commande de l'unité d'émission et de réception (120), laquelle électronique est alimentée en énergie électrique par l'unité de batterie (130) ou par l'appareil de terrain (2) et laquelle électronique est en contact électrique avec l'interface de communication (210) correspondante de l'appareil de terrain (2) et avec l'unité d'émission et de réception (120).

8. Couvercle de boîtier (1) selon au moins l'une des revendications 1 à 6, pour lequel est prévue, dans l'appareil de terrain, une électronique (220) destinée à la commande de l'unité d'émission et de réception (120), laquelle électronique est alimentée en énergie électrique par l'unité de batterie (130) ou par l'appareil de terrain (2), et laquelle électronique est en contact électrique avec l'interface de communication (210) correspondante de l'appareil de terrain (2).

9. Couvercle de boîtier (1) selon au moins l'une des revendications précédentes, pour lequel est prévu, dans le couvercle de boîtier (1), un élément de commande et d'affichage (170) destiné à la commande de l'appareil de terrain (2) et/ou à l'affichage des informations importantes pour l'appareil de terrain, l'élément de commande et d'affichage (170) étant alimenté en énergie électrique par l'unité de batterie (130) ou par l'appareil de terrain (2).

10. Couvercle de boîtier (1) selon au moins l'une des revendications précédentes, pour lequel le couvercle de boîtier (1) est fabriqué au moins partiellement en un matériau métallique.

11. Couvercle de boîtier (1) selon la revendication 10, pour lequel l'unité d'émission et de réception (120) est disposée en dehors du couvercle de boîtier (1).

12. Couvercle de boîtier (1) selon au moins l'une des revendications 1 à 9, pour lequel le couvercle de boîtier (1) est fabriqué au moins partiellement en une matière plastique.

13. Couvercle de boîtier (1) selon au moins l'une des revendications précédentes, pour lequel l'unité d'émission et de réception (120) est conçue de telle sorte à émettre et/ou à recevoir les informations importantes pour l'appareil de terrain selon un protocole de réseau sans fil, notamment WLAN, WirelessHART, Bluetooth, Zigbee et/ou NFC/RFID.
